# FASCICULE DE BREVET EUROPEEN

(11) **EP 2 368 015 B1**
(45) Date de publication et mention de la délivrance du brevet: **13.02.2013**
(21) Numéro de dépôt: 09764248.2
(22) Date de dépôt: 01.12.2009
(51) Int. Cl.: F01D 5/30

(54) **DISPOSITIF DE FIXATION D' AUBES A ATTACHE MARTEAU, DISQUE DE COMPRESSEUR, COMPRESSEUR ET TURBOMACHINE ASSOCIES**
VORRICHTUNG ZUM BEFESTIGEN VON HAMMERKLEMMSCHAUFELN, ZUGEHÖRIGE VERDICHTERNABE, VERDICHTER UND TURBOMOTOR
DEVICE FOR ATTACHING HAMMER CLAMP BLADES, ASSOCIATED COMPRESSOR HUB, COMPRESSOR, AND TURBINE ENGINE

(30) Priorité: 23.12.2008 FR 0859009
(43) Date de publication de la demande: 28.09.2011
(73) Titulaire: Snecma, 75015 Paris (FR)
(72) Inventeur: BELMONTE, Olivier, F-77930 Perthes en Gatinais (FR); BOSCO, Franck, Emmanuel, F-91700 Sainte Geneviève des Bois (FR)
(74) Mandataire: Gevers France
(86) Numéro de dépôt international: PCT/EP2009/066177
(87) Numéro de publication internationale: WO 2010/072522

(56) Documents cités:
- EP-A1- 1 650 405
- FR-A- 741 284
- GB-A- 154 599
- GB-A- 191 012 015
- SU-A1- 480 849

## Description

Le domaine de la présente invention est celui des turbomachines, et plus particulièrement celui des dispositifs de maintien des aubes de compresseur pour ces turbomachines.

Les turbomachines comprennent généralement un ou plusieurs compresseurs destinés à comprimer l'air aspiré dans l'entrée d'air, avant son introduction dans la chambre de combustion où il servira à faire brûler le carburant injecté et à assurer la propulsion recherchée. Les aubes de compresseur sont essentiellement de deux types, en ce qui concerne leur mode d'attache sur le disque correspondant. Certaines possèdent une attache dite brochée, c'est à dire qu'elles sont maintenues sur le disque par une pièce qui vient s'insérer dans un logement prévu à cet effet ; d'autres ont une attache marteau, c'est-à-dire que la forme du pied d'aube est évasée, formant un bulbe qui est glissé dans une rainure périphérique circonférentielle creusée dans la face externe de la jante du disque. Pour ces dernières, cette jante se présente, en coupe transversale, comme un demi-cercle en creux, surmonté de deux épaulements, dont la face intérieure présente une surface d'appui, dénommée couramment portée, qui sert à maintenir l'aube en centrifuge.

Les aubes sont insérées les uns après les autres par leurs pieds, dans cette rainure périphérique, ou attache, jusqu'à la remplir complètement. Pour engager les aubes dans la rainure périphérique une encoche d'introduction est pratiquée dans les épaulements latéraux, par laquelle peuvent passer les bulbes des pieds des aubes. Un dispositif de verrou est prévu pour maintenir la ou les dernières aubes introduites, qui sont situées en face de cette encoche, et les empêcher de ressortir. Ce dispositif a, en général, également pour fonction de retenir le jeu d'aubes en rotation circulaire et d'empêcher quelles ne soient entraînées par l'action des forces aérodynamiques qui s'exercent sur elles. A côté de ces encoches d'introduction des aubes on trouve généralement une ou deux encoches d'introduction des verrous, qui permettent d'insérer le ou les verrous dans la rainure périphérique pour bloquer circulairement les aubes.

Ces verrous comportent généralement, comme décrit dans le brevet FR 2810366 de la demanderesse, une pièce qui prend appui sur le fond de la rainure périphérique et sur les plates-formes des dernières aubes introduites pour assurer leur blocage en translation circulaire, et un moyen de serrage, telle qu'une vis, qui est accessible depuis l'extérieur de la rainure. Pour cela une découpe est généralement pratiquée dans la plateforme des dernières aubes introduites, de façon à procurer un accès à l'outil de serrage. Il s'ensuit que, au moins deux aubes du compresseur, et plus généralement quatre quand un verrou est disposé de chaque côté de l'encoche d'introduction des aubes, sont différentes des autres aubes de l'étage du compresseur.

Les inconvénients associés à cette configuration sont tout d'abord une rupture d'interchangeabilité entre les aubes avec pour conséquence l'obligation de gérer deux références, et en second lieu la nécessité de pratiquer au moins deux encoches dans les épaulements de la rainure périphérique, une pour l'encoche d'introduction des aubes et une, sinon deux, pour la ou les encoches d'introduction des verrous. Les opérations de fraisage sont donc plus nombreuses, avec, associées à elles, des risques supplémentaires de rebut des pièces en cas d'une mauvaise réalisation des opérations de fraisage, qui sont particulièrement délicates à réaliser.

On connait par ailleurs la demande de brevet EP 1650405 qui décrit un système d'immobilisation des aubes en translation dans la rainure du disque, à l'aide de système de boulons qui traversent la rainure et sont fixés sur des extensions radiales des épaulements du disque. Le nombre de boulons nécessaires dans cette configuration est particulièrement élevé et le système d'immobilisation est maintenu moyennant des perçages dans les épaulements du disque.

La présente invention a pour but de remédier à ces inconvénients en proposant un système d'attache des aubes qui ne présente pas certains des inconvénients de l'art antérieur et, en particulier, qui permette le verrouillage des aubes à attache marteau d'un étage de compresseur sans provoquer de rupture d'interchangeabilité entre ces aubes. Elle permet également de n'effectuer qu'un seul fraisage sur les épaulements du disque de compresseur, pour l'introduction des aubes, et supprime ceux qui étaient nécessaires à l'introduction du ou des verrous associés.

A cet effet, l'invention a pour objet un dispositif de blocage destiné à permettre le blocage circulaire d'un jeu d'aubes munies d'un pied de type marteau, sur la jante d'un disque de compresseur d'une turbomachine, ladite jante comportant une rainure périphérique sur sa face externe destinée à recevoir les pieds des aubes dudit jeu et deux épaulements encadrant ladite rainure dont les faces forment des portées de rétention desdites aubes, ladite jante comportant en outre une découpe ménagée dans au moins un desdits épaulements pour permettre l'introduction des pieds des aubes dans ladite rainure, ledit dispositif comportant un moyen d'immobilisation en translation des aubes dans ladite rainure, apte à être positionné dans ladite rainure entre deux aubes consécutives et maintenu lui-même en translation dans ladite rainure par un support auquel il a vocation à être assemblé à l'aide d'un moyen de fixation. Il est caractérisé en ce que ledit support est conformé pour s'intégrer dans ladite découpe et prendre circonférentiellement appui sur au moins une surface coopérante dudit épaulement.

Avec une telle configuration on réalise une immobilisation des aubes en translation dans la rainure avec un dispositif simple, ne comprenant que trois éléments et qui ne nécessite qu'une seule découpe d'un des épaulements du disque, sans perçage pour le passage des moyens d'immobilisation des aubes. Préférentiellement ledit moyen d'immobilisation est conformé pour ne pas interférer avec les aubes lors de son montage, de sorte que le jeu d'aubes peut être constitué d'aubes identiques.

Le fait de ne pas interférer avec les plates-formes des aubes, permet de ne pas différencier les aubes et d'avoir un modèle unique pour toutes les aubes d'un même jeu.

De façon préférentielle le support est conformé pour s'insérer dans la découpe selon une direction sensiblement parallèle à l'axe de la turbomachine.

Dans un mode particulier de réalisation le support a, en plein, la forme de la découpe pratiquée dans l'épaulement ouvert. On assure ainsi un bon équilibrage du disque de compresseur.

De façon avantageuse, ledit moyen d'immobilisation en translation comporte un bloc supérieur apte à se positionner entre les pieds de deux aubes consécutives pour les retenir en translation dans la rainure et une base apte à se positionner en fond de rainure sous les pieds des dites aubes. Il assure ainsi, par son bloc supérieur, la fonction d'immobilisation des aubes en translation circulaire, tout en étant lui-même retenu en centrifuge par les pieds des aubes qui immobilisent la base.

De façon préférentielle le bloc supérieur a sensiblement la forme d'un parallélépipède comportant deux parois orientées parallèlement à l'axe de la turbomachine et aptes à coopérer avec des faces correspondantes du pied des aubes à retenir.

Dans un mode particulier de réalisation la base comporte au moins deux segments s'étendant tangentiellement à la rainure de part et d'autre de la partie inférieure du bloc supérieur.

Préférentiellement le bloc supérieur comporte un premier perçage et le support comporte un second perçage, les deux perçages étant orientés de façon à être alignés lorsque le dispositif de blocage est en position sur le disque.

De façon préférentielle le moyen de fixation est un boulon passant par les deux perçages et dans lequel le support présente une face d'appui perpendiculaire à l'axe dudit boulon.

L'invention concerne également un disque de compresseur pour une turbomachine, destiné à porter un jeu d'aubes munies d'un pied de type marteau, la jante dudit disque comportant une rainure périphérique sur sa face externe destinée à recevoir les pieds des aubes dudit jeu et deux épaulements encadrant ladite rainure dont les faces forment des portées de rétention desdites aubes, ladite jante comportant en outre une découpe ménagée dans au moins un desdits épaulements pour permettre l'introduction des pieds des aubes dans ladite rainure, caractérisé en ce que ladite découpe est conformée pour recevoir le support de maintien du moyen d'immobilisation des aubes d'un dispositif de blocage tel que décrit ci-dessus et en ce que ledit épaulement comporte une surface coopérante pour un appui circonférentiel dudit support.

Elle concerne encore un compresseur d'une turbomachine comportant au moins un disque tel que décrit ci-dessus ainsi qu'un compresseur d'une turbomachine équipé d'un jeu d'aubes munies d'un pied de type marteau et d'un un dispositif de blocage tel que décrit ci-dessus. Elle concerne enfin une turbomachine comportant un tel compresseur.

L'invention sera mieux comprise, et d'autres buts, détails, caractéristiques et avantages de celle-ci apparaîtront plus clairement au cours de la description explicative détaillée qui va suivre, d'un mode de réalisation de l'invention donné à titre d'exemple purement illustratif et non limitatif, en référence aux dessins schématiques annexés.

Sur ces dessins :
- la figure 1 est une vue en coupe longitudinale d'un compresseur de turbomachine, comportant des aubes avec attaches brochées et des aubes avec attaches marteau ;
- la figure 2 est une vue en perspective d'une découpe d'un épaulement muni d'un dispositif de blocage en translation circulaire des aubes selon un mode de réalisation de l'invention, le disque étant porteur d'une aube ;
- la figure 3 est une vue de côté d'un disque de compresseur adapté à recevoir un dispositif de blocage selon un mode de réalisation de l'invention, une aube étant en position dans la rainure périphérique du disque ;
- la figure 4 est une vue en perspective d'un verrou en translation pour des aubes montées dans la rainure périphérique, selon un mode de réalisation de l'invention ;
- la figure 5 est une vue en perspective d'un support d'un moyen de fixation d'un verrou, selon un mode de réalisation de l'invention ;
- la figure 6 est une vue en perspective d'un verrou et du support de son moyen de fixation selon un mode de réalisation de l'invention, dans leurs positions relatives respectives ;
- la figure 7 est une vue en perspective d'un verrou selon un mode de réalisation de l'invention, en position sous une aube dans la rainure périphérique d'un disque de compresseur.

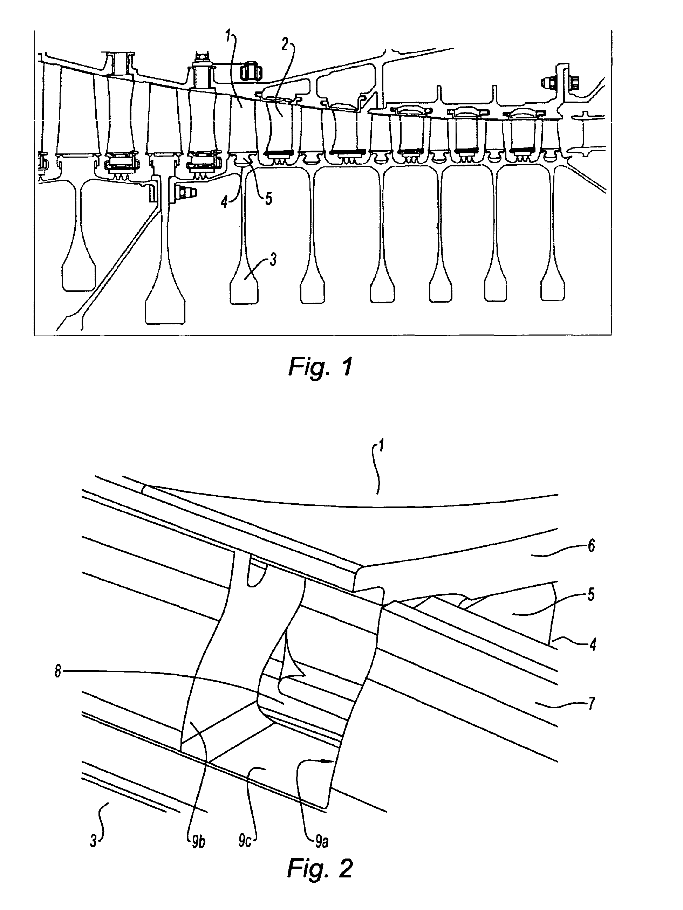

En se référant à la figure 1, on voit en coupe un compresseur de turbomachine comprenant une succession d'étages constitués par une alternance d'aubes mobiles 1 et d'aubes fixes 2. Les aubes mobiles 1 sont portées par les jantes des disques de compresseur 3. Les aubes des deux premiers étages, situés à gauche sur la figure, sont fixées par brochage alors que les aubes des étages ultérieurs sont glissées, grâce à un système d'attache marteau, dans une rainure périphérique 4 creusée dans la face externe de la jante. (NOTA : Dans toute la description la référence externe s'entend comme la partie la plus éloignée radialement de l'axe de rotation de la turbomachine.)

En se référant à la figure 2, on voit la face externe de la jante d'un disque de compresseur 3, creusée d'une rainure périphérique 4 dans laquelle est glissé le pied 5 d'une aube 1. La rainure périphérique 4 est, au niveau de l'aube, entièrement recouverte par la plate-forme 6 de celle-ci. La jante du disque 3 présente deux épaulements dont un, l'épaulement ouvert 7, présente une découpe 8 débouchant sur la face externe de la jante, par laquelle peut passer le pied 5 de l'aube. Cette découpe constitue la fenêtre d'introduction des aubes, par laquelle passent toutes les aubes 1 lors de leur installation dans la rainure 4. La découpe 8 est limitée, sur la circonférence du disque, par deux faces parallèles 9a et 9b s'étendant parallèlement à l'axe de rotation du disque 3 ; elle est limitée radialement par une forme en plan, également parallèle à cet axe de rotation mais perpendiculaire au plan des faces 9a et 9b, qui forme un plancher 9c pour la découpe. Dans le mode de réalisation représenté la découpe 8 débouche radialement de la jante de l'épaulement 7.

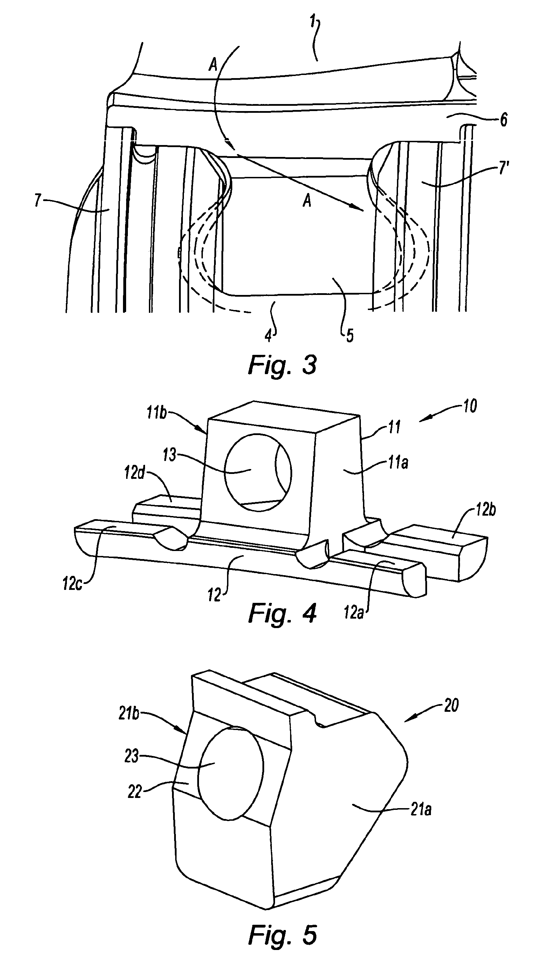

En se référant à la figure 3 on voit une aube 1, avec son pied 5 en place dans la rainure périphérique 4 creusée dans la face externe du disque 3. La plate-forme 6 de l'aube est en appui sur les deux épaulements 7 et 7' de la face externe du disque, qu'elle recouvre entièrement. Sur la figure est également représenté le cheminement A suivi par le pied 5 de l'aube lors de son introduction dans la rainure périphérique 4. Le pied 5 de l'aube, en position dans la rainure 4, présente un jeu avec le fond de la rainure qui permet d'y insérer une partie du verrou des aubes, comme cela sera expliqué plus loin.

Sur la figure 4 est représenté un verrou 10, formant moyen d'immobilisation en translation des aubes 1, qui a pour fonction de bloquer les aubes dans la rainure périphérique 4 lorsqu'elles y ont toutes été introduites. Ce verrou 10 présente un bloc supérieur 11 de forme sensiblement parallélépipédique, sans que cette forme soit impérative, avec deux parois latérales 11a et 11b destinées à coopérer avec les faces latérales des pieds d'aubes pour leur servir d'appui. Il présente également une base 12, sur laquelle repose le bloc supérieur 11, dont la forme inférieure s'adapte à celle du fond de la rainure périphérique 4. Cette base est représentée, sans que celle-ci soit impérative, sous la forme d'un support du bloc supérieur qui se prolonge latéralement par quatre segments 12a à 12d, détachés les uns des autres et rattachés aux quatre coins inférieurs du bloc supérieur 11.

Ces segments sont plats sur leur face supérieure et reproduisent sur leur face inférieure la forme de la rainure périphérique avec laquelle ils coopèrent lorsque le verrou est positionné en fond de rainure périphérique. L'épaisseur de ces segments est inférieure au jeu existant entre le pied 5 de l'aube 1 et la rainure 4 lorsque les aubes sont implantées dans la rainure comme décrit sur la figure 3, de sorte qu'ils peuvent reposer sur le fond de la rainure périphérique 4 et s'étendre sous les pieds 5 des aubes 1, dans le sens circonférentiel, sans interférer avec eux.

Le bloc supérieur 11 est traversé de part en part, dans une direction perpendiculaire à la direction principale des segments 12a à 12d, par un premier perçage 13 situé au dessus du niveau de la base 12 et positionné de sorte qu'il se trouve en face de la découpe 8 lorsque le verrou 10 est en place dans la rainure périphérique 4.

La figure 5 représente un support 20, formant support pour un moyen de fixation (non représenté) du verrou 10 et assurant le blocage en translation de celui-ci lorsqu'il est en position dans la rainure périphérique 4. Tel que représenté il a, en plein, sans que cette forme soit impérative, la forme qu'a, en creux, la découpe 8 de l'épaulement ouvert 7 du disque 3. Outre sa fonction de blocage en translation du verrou, il est destiné à combler le vide laissé par cette découpe après l'introduction du jeu d'aubes 1 dans la rainure périphérique 4. Il présente deux faces planes 21a et 21b parallèles entre elles et qui, quand il est en place dans l'épaulement ouvert 7, sont parallèles aux faces 9a et 9b de la découpe 8. Il est également traversé par un second perçage 23 dont l'axe est, après mise en place du dispositif 20 dans la découpe 8 et du verrou 10 en face de cette découpe, confondu avec celui du premier perçage 13 pratiqué dans le verrou 10. Compte tenu de cette disposition relative, le moyen de fixation peut avantageusement être un boulon qui traverse le support 20 et le verrou 10. Le second perçage 23 débouche, sur la face extérieure du support 20, sur une face d'appui 22 qui ménage autour du second perçage 23 une surface plane sur laquelle prend appui le boulon considéré.

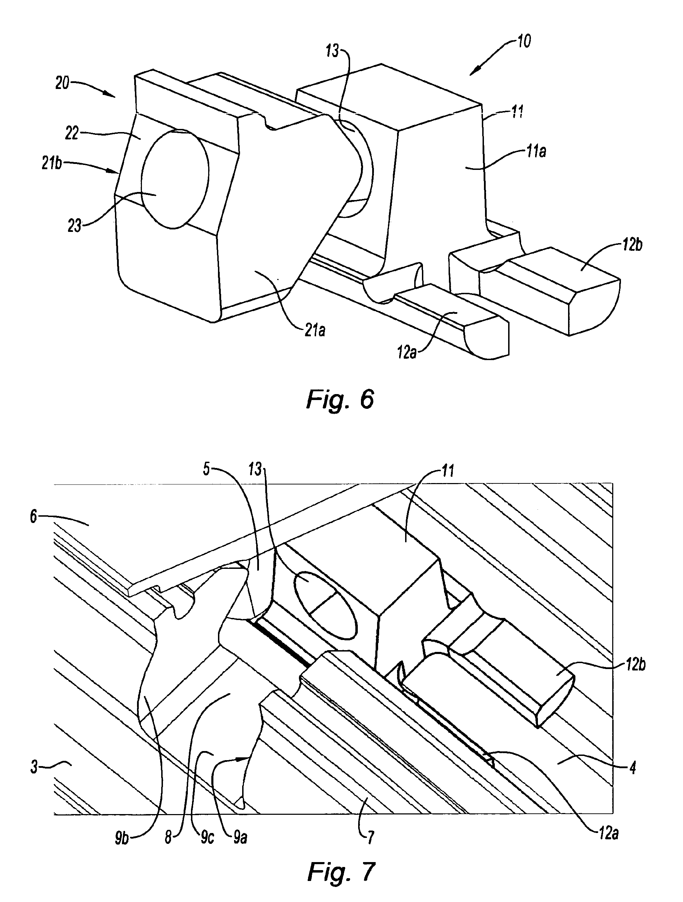

La figure 6 montre la position relative du verrou 10 et du support 20 lorsqu'ils sont tous deux en position sur la jante du disque 3. Les deux perçages 13 et 23 ont, dans cette position, des axes colinéaires. Un moyen de fixation, tel qu'un boulon, non représenté, peut passer au travers des deux perçages pour assurer le blocage du verrou 10 par le support 20, les possibilités de déplacement circonférentiel du verrou étant dès lors interdites par la coopération des faces 21 a et 21b du support 20 avec les faces 9a et 9b de la découpe 8.

La figure 7 montre le verrou 10 en position dans le fond de la rainure périphérique 4, et une aube 1 positionnée dans ladite rainure périphérique. Cette figure montre la position dans laquelle se trouve le verrou lorsque toutes les aubes 1 sont insérées dans la rainure périphérique 4, l'aube symétrique de l'aube montrée n'étant toutefois pas représentée pour des questions de lisibilité de la figure. Le verrou 10 a été positionné en face de la découpe 8, par un glissement de l'ensemble constitué par les aubes et le verrou dans la rainure périphérique 4. Le pied 5 de l'aube 1 est positionné en appui contre une paroi latérale 11b du bloc supérieur 11 et recouvre les segments 12c et 12d de la base 12 du verrou 10. La plate-forme 6 de l'aube recouvre l'ensemble et repose en appui sur la face externe du disque 3.

On va maintenant décrire le montage d'un jeu d'aubes sur un disque de compresseur comportant une découpe, à l'aide d'un dispositif de blocage en translation des aubes selon un mode de réalisation de l'invention.

Chaque aube 1 est tout d'abord présentée de façon inclinée, en face de la découpe 8 pratiquée dans l'épaulement ouvert 7, avec l'extrémité de sa plate-forme 6 opposée à la découpe, positionnée en appui sur l'épaulement non ouvert 7'. En maintenant le contact de cette extrémité sur l'épaulement 7', l'aube 1 est basculée dans le sens indiqué par la flèche A de la figure 3, de façon à faire passer le pied 5 entre les deux faces 9a et 9b de la découpe 8, jusqu'à ce que l'autre extrémité de la plate-forme 6 vienne, elle aussi, en appui sur la face externe du disque 3, au niveau, cette fois, de l'épaulement ouvert 7.

Une fois que le pied 5 de l'aube est introduit et que la plate-forme 6 repose sur les deux épaulements de la face externe du disque 3, l'aube 1 est libre de circuler dans la rainure périphérique 4 et peut être déplacée, vers la droite ou vers la gauche de la découpe, de façon à libérer cette dernière et la rendre disponible pour l'implantation d'une autre aube 1. Une fois que toutes les aubes 1 du jeu d'aubes de l'étage considéré, sauf deux, sont implantées, l'opérateur décale la dernière, par exemple vers la gauche, tout en empêchant que la première aube implantée, qui se trouve maintenant à droite de la découpe 8 ne vienne se placer devant la découpe 8. Il suffit pour cela qu'il tasse les aubes les unes contre les autres et que toutes les plates-formes 6 viennent en contact. L'espace ainsi laissé devant la découpe 8 permet de placer le verrou 10 dans la rainure périphérique 4 entre la première et la dernière aube implantées. Compte tenu du jeu circonférentiel existant classiquement entre les plates-formes des aubes et de la longueur hors-tout du verrou qui est inférieure à celle de deux plates-formes, la longueur disponible dans la rainure périphérique est suffisante pour que le verrou 10 puisse être mis en place sans difficulté.

L'opérateur fait ensuite tourner l'ensemble constitué par les aubes 1 et le verrou 10, soit dans un sens soit dans l'autre, pour décaler le bloc supérieur 11 du verrou et faire en sorte qu'il ne soit pas positionné en face de la découpe 8. Il insère alors l'avant-dernière aube 1 du jeu dans la rainure périphérique 4 de la même façon que pour les aubes précédentes. Cette opération est rendue possible par le fait que le jeu radial entre le pied 5 de l'aube 1 et le fond de la rainure périphérique 4 est supérieur à l'épaisseur des segments 12a à 12d ; le pied de l'aube peut donc entrer dans la rainure périphérique 4 sans interférer avec ces segments. L'opérateur fait ensuite tourner à nouveau le jeu d'aubes et le verrou 10, cette fois dans le sens inverse au sens précédent, jusqu'à faire passer le bloc supérieur 11 devant la découpe 8 et dégager à nouveau la partie de la rainure périphérique 4 située en face de la découpe 8. Il insère alors la dernière aube 1 du jeu comme il l'a fait pour l'avant-dernière.

Il reste à assurer le verrouillage du jeu contre les déplacements circulaires dans la rainure périphérique 4. Pour cela l'opérateur ramène le jeu en arrière jusqu'à positionner le bloc supérieur 11 du verrou 10 en face de la découpe 8. Il insère le support 20 entre les deux faces 9a et 9b de la découpe 8, dans la continuité circonférentielle de l'épaulement ouvert 7, puis fixe ledit support 20 sur le verrou 10 à l'aide d'un moyen de fixation, du type boulon, prévu à cet effet.

L'ensemble est alors verrouillé en rotation dans la rainure périphérique par la coopération entre les faces 21a et 21b du dispositif 20 avec les faces 9a et 9b de la découpe 8. En second lieu le verrou 10 et son support 20, qui sont solidarisés par le moyen de fixation du type boulon, sont maintenus, pour l'un dans la rainure périphérique 4 et pour l'autre dans la découpe 8, en réaction à la force centrifuge, par les pieds 5 des deux dernières aubes 1 insérées : les segments 12a à 12d du verrou viennent, sous l'action de cette force, en appui contre les pieds 5 de ces deux aubes qui sont, eux, maintenus par les portées des épaulements 7 et 7' de la jante du disque 3.

L'invention a été décrite avec un support 20 du verrou 10 réalisé dans une pièce détachable de l'épaulement ouvert 7, du fait que ce support se situe au niveau de la fenêtre d'introduction des aubes. L'invention portant essentiellement sur le fait qu'existe un dispositif de blocage en translation qui prenne appui sur un support lié à un des épaulements du disque, il peut être envisagé de séparer les deux fonctions de blocage en translation et de fenêtre d'introduction des aubes assurées par le support 20 et la découpe 8 dans la version décrite ci-dessus. Le blocage peut ainsi être réalisé par un simple alésage, par lequel passe le moyen de fixation, qui traverse l'épaulement ouvert 7 en dessous des plates-formes des aubes ; une fenêtre d'introduction des aubes est alors positionnée à un quelconque autre endroit sur la circonférence de la jante du disque 3.

## Revendications

1. Dispositif de blocage destiné à permettre le blocage circulaire d'un jeu d'aubes (1) munies d'un pied (5) de type marteau, sur la jante d'un disque (3) de compresseur d'une turbomachine, ladite jante comportant une rainure périphérique (4) sur sa face externe destinée à recevoir les pieds (5) des aubes dudit jeu et deux épaulements (7, 7') encadrant ladite rainure dont les faces forment des portées de rétention desdites aubes (1), ladite jante comportant en outre une découpe (8) ménagée dans au moins un desdits épaulements (7) pour permettre l'introduction des pieds (5) des aubes (1) dans ladite rainure (4), ledit dispositif comportant :
• un moyen d'immobilisation en translation (10) des aubes dans ladite rainure, apte à être positionné dans ladite rainure (4) entre deux aubes consécutives et maintenu lui-même en translation dans ladite rainure par
• un support (20) auquel il a vocation à être assemblé à l'aide d'
• un moyen de fixation,
**caractérisé en ce que** ledit support est conformé pour s'intégrer dans ladite découpe (8) et prendre circonférentiellement appui sur au moins une surface coopérante (9a, 9b) dudit épaulement (7)..

2. Dispositif de blocage selon la revendication 1 dans lequel ledit moyen d'immobilisation (10) est conformé pour ne pas interférer avec les aubes (1) lors de leur installation dans la rainure, de sorte que le jeu d'aubes peut être constitué d'aubes (1) identiques.

3. Dispositif de blocage selon l'une des revendications 1 ou 2 dans lequel le support (20) est conformé pour s'insèrer dans la découpe (8) selon une direction sensiblement parallèle à l'axe de la turbomachine.

4. Dispositif de blocage selon l'une des revendications 1 à 3 dans lequel le support (20) a, en plein, la forme de la découpe (8) pratiquée dans l'épaulement ouvert (7).

5. Dispositif de blocage selon l'une des revendications 1 à 4 dans lequel ledit moyen d'immobilisation en translation (10) comporte un bloc supérieur (11) apte à se positionner entre les pieds (5) de deux aubes (1) consécutives pour les retenir en translation dans la rainure (4) et une base (12) apte à se positionner en fond de rainure (4) sous les pieds (5) des dites aubes.

6. Dispositif de blocage selon la revendication 5 dans lequel le bloc supérieur (11) a sensiblement la forme d'un parallélépipède comportant deux parois (11a, 11b) orientées parallèlement à l'axe de la turbomachine et aptes à coopérer avec des faces correspondantes du pied (5) des aubes à retenir.

7. Dispositif de blocage selon l'une des revendications 5 ou 6 dans lequel la base comporte au moins deux segments (12a, 12b, 12c, 12d) s'étendant tangentiellement à la rainure (4) de part et d'autre de la partie inférieure du bloc supérieur (11).

8. Dispositif de blocage selon l'une des revendications 5 à 7 dans lequel le bloc supérieur (11) comporte un premier perçage (13) et dans lequel le support (20) comporte un second perçage (23), les axes des deux perçages étant orientés de façon à être alignés lorsque le dispositif de blocage est en position sur le disque (3).

9. Dispositif de blocage selon la revendication 8 dans lequel le moyen de fixation est un boulon passant par les deux perçages (13, 23) et dans lequel le support (20) présente une face d'appui (22) perpendiculaire à l'axe dudit boulon.

10. Disque de compresseur pour une turbomachine, destiné à porter un jeu d'aubes (1) munies d'un pied (5) de type marteau, la jante dudit disque comportant une rainure périphérique (4) sur sa face externe destinée à recevoir les pieds (5) des aubes dudit jeu et deux épaulements (7, 7') encadrant ladite rainure dont les faces forment des portées de rétention desdites aubes (1), ladite jante comportant en outre une découpe (8) ménagée dans au moins un desdits épaulements (7) pour permettre l'introduction des pieds (5) des aubes (1) dans ladite rainure (4), **caractérisé en ce que** ladite découpe est conformée pour recevoir le support (20) de maintien du moyen d'immobilisation des aubes (10) d'un dispositif de blocage selon l'une des revendications 1 à 9 et **en ce que** ledit épaulement comporte une surface coopérante (9a, 9b) pour un appui circonférentiel dudit support.

11. Compresseur d'une turbomachine comportant au moins un disque selon la revendication 10.

12. Compresseur d'une turbomachine selon la revendication 11 équipé d'un jeu d'aubes (1) munies d'un pied (5) de type marteau et d'un dispositif de blocage des aubes selon l'une des revendications 1 à 9.

13. Turbomachine comportant un compresseur selon la revendication 12.

## Claims

1. A locking device designed to permit the locking, in a circular fashion, of a set of blades (1) provided with a hammer-type root (5), on the rim of a turbine engine compressor hub (3), said rim comprising a peripheral groove (4) on the outer face thereof designed to receive the roots (5) of the blades of said set and two shoulders (7, 7') surrounding said groove of which the faces form bearing surfaces for holding said blades (1), said rim further comprising a cutout (8) formed in at least one of said shoulders (7) to enable the roots (5) of the blades (1) to be inserted in said groove (4), said device comprising:
- a means (10) for immobilizing the blades in translation in said groove, capable of being positioned in said groove (4) between two consecutive blades and in turn held in translation in said groove by
- a support (20) on which it is able to be assembled by means of
- a fixing means,
**characterized in that** said support is shaped so as to fit in said cutout (8) and to bear circumferentially on at least one cooperating surface (9a, 9b) of said shoulder (7).

2. The locking device as claimed in claim 1, in which said immobilizing means (10) is shaped so as not to interfere with the blades (1) during their installation in the groove, so that the set of blades may be made up of identical blades (1).

3. The locking device as claimed in one of claims 1 or 2, in which the support (20) is shaped to be inserted into the cutout (8) in a direction substantially parallel to the axis of the turbine engine.

4. The locking device as claimed in one of claims 1 to 3, in which the shape of the support (20) is entirely the shape of the cutout (8) formed in the open shoulder (7).

5. The locking device as claimed in one of claims 1 to 4, in which said means (10) for immobilizing in translation comprises an upper block (11) capable of being positioned between the roots (5) of two consecutive blades (1) to retain them in translation in the groove (4) and a base (12) capable of being positioned at the bottom of the groove (4) under the roots (5) of said blades.

6. The locking device as claimed in claim 5, in which the upper block (11) has substantially the shape of a parallelepiped comprising two walls (11a, 11b) oriented parallel with the axis of the turbine engine and capable of cooperating with the corresponding faces of the root (5) of the blades to be retained.

7. The locking device as claimed in one of claims 5 or 6, in which the base comprises at least two segments (12a, 12b, 12c, 12d) extending tangentially to the groove (4) on both sides of the lower part of the upper block (11).

8. The locking device as claimed in one of claims 5 to 7, in which the upper block (11) comprises a first drilled hole (13) and in which the support (20) comprises a second drilled hole (23), the axes of the two drilled holes being oriented so as to be aligned when the locking device is in position on the hub (3).

9. The locking device as claimed in claim 8, in which the fixing means is a bolt passing through the two drilled holes (13, 23) and in which the support (20) has a bearing face (22) perpendicular to the axis of said bolt.

10. A compressor hub for a turbine engine, designed to carry a set of blades (1) provided with a hammer-type root (5), the rim of said hub comprising a peripheral groove (4) on the outer face thereof designed to receive the roots (5) of the blades of said set and two shoulders (7, 7') surrounding said groove of which the faces form bearing surfaces for holding said blades (1), said rim further comprising a cutout (8) formed in at least one of said shoulders (7) to enable the roots (5) of the blades (1) to be inserted in said groove (4), **characterized in that** said cutout is shaped to receive the support (20) for holding the means (10) for immobilizing the blades of a locking device as claimed in one of claims 1 to 9 and **in that** said shoulder comprises a cooperating surface (9a, 9b) for the circumferential bearing of said support.

11. The compressor of a turbine engine comprising at least one hub as claimed in claim 10.

12. The compressor of a turbine engine as claimed in claim 11, provided with a set of blades (1) provided with a hammer-type root (5) and a locking device for the blades as claimed in one of claims 1 to 9.

13. A turbine engine comprising a compressor as claimed in claim 12.

## Patentansprüche

1. Sicherungsvorrichtung, die dafür bestimmt ist, die Sicherung im Kreis eines Satzes von Schaufeln (1), die mit einem Hammer-Fuß (5) versehen sind, auf dem Rand einer Verdichterscheibe (3) einer Strömungsmaschine zu ermöglichen, wobei der Rand eine Umfangsnut (4) auf seiner Außenseite aufweist, die dafür bestimmt ist, die Füße (5) der Schaufeln des Satzes aufzunehmen, und zwei Ansätze (7, 7'), die die Nut einfassen und deren Seiten Halteflächen für die Schaufeln (1) bilden, wobei der Rand ferner einen Ausschnitt (8) aufweist, der in mindestens einem der Ansätze (7) vorgesehen ist, um das Einsetzen der Füße (5) der Schaufeln (1) in die Nut (4) zu ermöglichen, wobei die Vorrichtung Folgendes aufweist:
- ein Mittel (10) zum translatorischen Feststellen der Schaufeln in der Nut, das geeignet ist, in der Nut (4) zwischen zwei aufeinanderfolgenden Schaufeln platziert zu werden und selbst translatorisch in der Nut gehalten zu werden durch
- einen Halter (20), wobei es dazu geeignet ist, mit ihm verbunden zu werden mithilfe
- eines Befestigungsmittels,
**dadurch gekennzeichnet, dass** der Halter geformt ist, um sich in den Ausschnitt (8) einzufügen und um den Umfang herum an mindestens einer mitwirkenden Fläche (9a, 9b) des Ansatzes (7) anzuliegen.

2. Sicherungsvorrichtung nach Anspruch 1, wobei das Mittel zum Feststellen (10) geformt ist, um die Schaufeln (1) beim Anordnen derselben in der Nut nicht zu behindern, sodass der Schaufelsatz aus identischen Schaufeln (1) gebildet sein kann.

3. Sicherungsvorrichtung nach einem der Ansprüche 1 oder 2, wobei der Halter (20) geformt ist, um in einer Richtung, die im Wesentlichen parallel zur Achse der Strömungsmaschine verläuft, in den Ausschnitt (8) eingesetzt zu werden.

4. Sicherungsvorrichtung nach einem der Ansprüche 1 bis 3, wobei der Halter (20) insgesamt die Form des Ausschnitts (8), der in den offenen Ansatz (7) eingebracht ist, aufweist.

5. Sicherungsvorrichtung nach einem der Ansprüche 1 bis 4, wobei das Mittel (10) zum translatorischen Feststellen einen oberen Block (11) aufweist, der geeignet ist, zwischen den Füßen (5) von zwei aufeinanderfolgenden Schaufeln (1) platziert zu werden, um sie translatorisch in der Nut (4) zu halten, und eine Basis (12), die geeignet ist, am Boden der Nut (4) unter den Füßen (5) der Schaufeln platziert zu werden.

6. Sicherungsvorrichtung nach Anspruch 5, wobei der obere Block (11) im Wesentlichen die Form eines Parallelflachs aufweist, der zwei Wände (11a, 11 b) aufweist, die parallel zur Achse der Strömungsmaschine ausgerichtet sind und geeignet sind, mit entsprechenden Flächen des Fußes (5) der zu haltenden Schaufeln zusammenzuwirken.

7. Sicherungsvorrichtung nach einem der Ansprüche 5 oder 6, wobei die Basis mindestens zwei Abschnitte (12a, 12b, 12c, 12d) aufweist, die tangential zur Nut (4) auf beiden Seiten des unteren Teils des oberen Blocks (11) verlaufen.

8. Sicherungsvorrichtung nach einem der Ansprüche 5 bis 7, wobei der obere Block (11) eine erste Bohrung (13) aufweist und wobei der Halter (20) eine zweite Bohrung (23) aufweist, wobei die Achsen der beiden Bohrungen so gerichtet sind, dass sie ausgerichtet sind, wenn sich die Sicherungsvorrichtung in ihrer Position auf der Scheibe (3) befindet.

9. Sicherungsvorrichtung nach Anspruch 8, wobei das Befestigungsmittel ein Bolzen ist, der durch die beiden Bohrungen (13, 23) hindurchgeht und wobei der Halter (20) eine Anlagefläche (22) senkrecht zur Achse des Bolzens aufweist.

10. Verdichterscheibe für eine Strömungsmaschine, die dafür bestimmt ist, einen Satz von Schaufeln (1), die mit einem Hammer-Fuß (5) versehen sind, zu tragen, wobei der Rand der Scheibe eine Umfangsnut (4) auf seiner Außenseite aufweist, die dafür bestimmt ist, die Füße (5) der Schaufeln des Satzes aufzunehmen, und zwei Ansätze (7, 7'), die die Nut einfassen und deren Seiten Halteflächen für die Schaufeln (1) bilden, wobei der Rand ferner einen Ausschnitt (8) aufweist, der in mindestens einem der Ansätze (7) vorgesehen ist, um das Einsetzen der Füße (5) der Schaufeln (1) in die Nut (4) zu ermöglichen, **dadurch gekennzeichnet, dass** der Ausschnitt geformt ist, um den Halter (20) zum Halten des Mittels zum Feststellen der Schaufeln (10) einer Sicherungsvorrichtung nach einem der Ansprüche 1 bis 9 aufzunehmen und dass der Ansatz eine mitwirkende Fläche (9a, 9b) zum Anliegen des Umfangs des Halters aufweist.

11. Verdichter einer Strömungsmaschine, der mindestens eine Scheibe nach Anspruch 10 aufweist.

12. Verdichter einer Strömungsmaschine nach Anspruch 11, der mit einem Satz von Schaufeln (1), die mit einem Hammer-Fuß (5) versehen sind, und mit einer Sicherungsvorrichtung für die Schaufeln nach einem der Ansprüche 1 bis 9 ausgestattet ist.

13. Strömungsmaschine, die einen Verdichter nach Anspruch 12 aufweist.
